# EUROPEAN PATENT APPLICATION

(11) **EP 2 627 045 A1**
(43) Date of publication of application: **14.08.2013**
(21) Application number: 12154973.7
(22) Date of filing: 10.02.2012
(51) Int. Cl.: H04L 12/58

(54) **METHOD AND APPARATUS PERTAINING TO THE USE OF IDENTIFYING IMAGES FOR SOCIAL CONTENT SOURCES**

(71) Applicant: Research In Motion Limited, Waterloo, ON N2L 3W8 (CA)
(72) Inventor: Chen, Henry Yao-Tsu, Waterloo, Ontario N2L 3W8 (CA)
(74) Representative: Greenaway, Martin William

(57) **Abstract**

A control circuit monitors treatment of incoming social content and then uses this treatment information to determine an identifying image to present for given social content sources. The monitored treatment can comprise, for example, whether the recipient opens incoming social content from various social content sources over some relevant period of time. By one approach, when the recipient user is tending to ignore social content from a given social content source, these teachings can provide for automatically selecting and displaying an image of a non-face portion of that social content source (such as an image of the backside of a person's head) to thereby convey a sense that the recipient's relationship with this particular person has been neglected.

## Description

### Field of Technology

The present disclosure relates generally to social content-related information and more particularly to the use of identifying images.

### Background

Modern electronics and networking capabilities facilitate a wide variety of social content exchanges. Examples of social content exchanges include, but are not limited to, voice-based exchanges (such as wireless and non-wireless telephony, voice over Internet (VoIP) exchanges (such as SKYPE™), etcetera), text-based exchanges (such as email, short-message service (SMS) messages, texts, TWEETS™, instant messages (IM), etcetera), and so forth. Such exchanges often begin with an initiating party.

Many times the receiving device provides the receiving party with identifying information as regards the source of incoming social content (i.e., the initiating party). An incoming telephone call, for example, may prompt an automatic display of the calling party's telephone number on the display of the called party's handset. As another example, an incoming email or text will typically prompt a display of the email/text address for the sourcing party. In some cases this identifying information includes an identifying image for the corresponding social content source.

Many persons have a considerable number of other persons/entities from whom they receive various forms of social content. While identifying information as noted above can help with respect to managing a large number of social contacts it nevertheless remains a considerable challenge for some people to properly manage their electronic relationships. As but one illustrative example in these regards, a given recipient may intentionally (or unintentionally) ignore a series of communications from a given social content source to the point of endangering that particular relationship.

### Brief Description of the Drawings

FIG. 1 is a flow diagram in accordance with the disclosure.

FIG. 2 is a screen shot schematic in accordance with the disclosure.

FIG. 3 is a screen shot schematic in accordance with the disclosure.

FIG. 4 is a screen shot detail view in accordance with the disclosure.

FIG. 5 is a block diagram in accordance with the disclosure.

FIG. 6 is a block diagram in accordance with the disclosure.

### Detailed Description

The following describes an apparatus and method pertaining to monitoring a recipient's treatment of incoming social content and then using this treatment information to determine an identifying image to present for given ones of the various social content sources. The monitored treatment can comprise, for example, whether the recipient opens incoming social content from various social content sources over some relevant period of time. By one approach, when the recipient user is tending to ignore social content from a given social content source, these teachings provide for automatically selecting and displaying an image of a non-face portion of that social content source (such as an image of the backside of the head of the person associated with that social content source) to thereby convey an easily-perceived sense that the recipient's relationship with this particular person has been neglected.

These teachings can be applied in conjunction with a variety of social content including but not limited to a variety of text and voice-based content. These teachings are also highly flexible in practice and will accommodate a wide variety of practices with regards to the imagery utilized to convey a sense of concern regarding the recipient's relationship with the social content source.

So configured, for example, the recipient of social content can be immediately and intuitively informed when they have been ignoring social content from a given source to some given extent. The recipient can then act in a more informed manner as regards whether, how, and when to respond to incoming social content.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

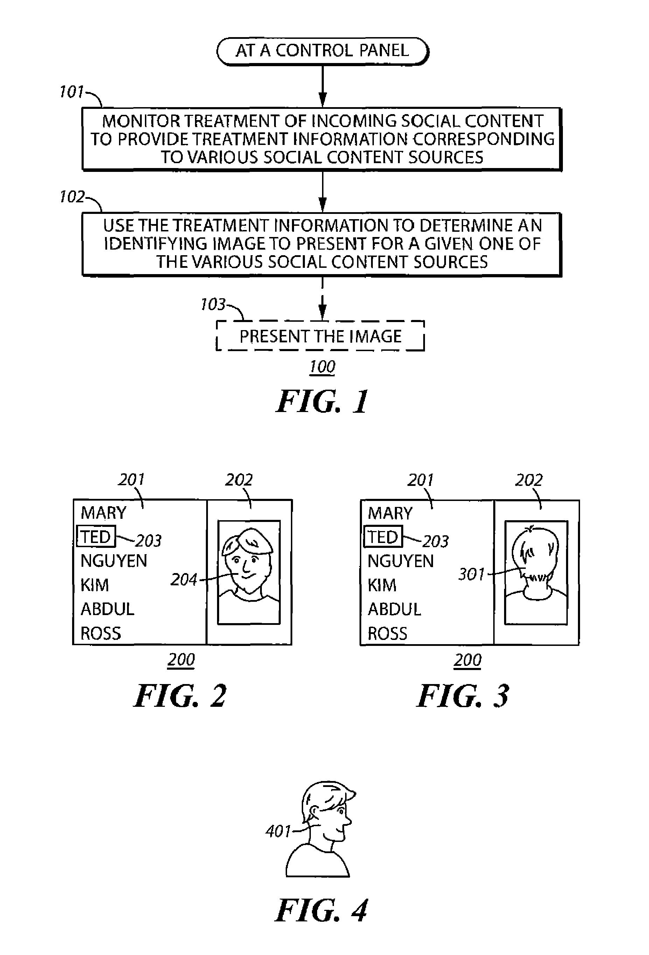

FIG. 1 presents a process 100 that accords with these teachings. For the sake of illustration it is presumed that a control circuit of choice carries out the described actions. Elaboration in these regards appears further herein.

This process 100 provides for monitoring 101 treatment of incoming social content to thereby provide treatment information corresponding to various social content sources. The social content itself can vary as desired with the application setting. Examples include, but are not limited to, emails, short-message service (SMS) messages, texts, TWEETS™, voice calls, and so forth. Accordingly, this monitoring 101 of the treatment of incoming social content can comprise, by way of illustration, monitoring the treatment of incoming emails, voice calls, texts, and so forth.

This process 100 accommodates a flexible approach in these regards. By one approach, this process 100 can provide for monitoring 101 how a given incoming social content item is treated within a predetermined period of time of first being received. The duration of the predetermined period of time can vary as desired. These teachings will accommodate relatively short periods of time (such as, for example, five seconds, one minute, and so forth), relatively long periods of time (such as, for example, one hour, one day, one week, or greater), and any period of time between such bounds.

The aforementioned treatment information can also vary with the application setting as desired. By one approach, for example, the treatment information can indicate an extent to which the incoming social content was processed per a user's corresponding instructions. When the social content comprises, for example, an email, the treatment information can indicate whether the user opened the email. When the social content comprises, for example, an incoming voice call, the treatment information can indicate whether the user accepted the voice call to complete the connection.

This treatment information can also indicate affirmative actions taken by the user that indicate a present disinterest (or, conversely, interest) in the social content. Examples in these regards include but are not limited to deleting an email or text without first opening the email or text, deleting a voice mail message without first playing all or part of the message, asserting an "ignore" button to silence a cellular telephone rather than answer an incoming voice call, placing a phone call or sourcing an email or text to the social content source, and so forth.

By one approach, this monitoring 101 includes aggregating such observations regarding social content treatment over some period of time. This aggregating might comprise, for example, maintaining a count of how many times email from a given social content source has been deleted without first opening those emails during the last three days, seven days, or other time frame of interest. As another example, this aggregating might comprise calculating a percentage that indicates the percentage of emails from a given source that have been deleted without being opened during that past given number of days, weeks, or months.

By one approach, a one-size-fits-all approach can serve in these regards. Such an approach assesses the treatment of all social content and sources in a common and similar manner. These teachings will accommodate a more flexible approach if desired, however. As one illustrative example in these regards, the user might be permitted to categorize all of their social content sources as being a first category of source or a second category of source.

In such a case, the standard to assess when a social content source is possibly being unduly ignored can be lower for the second category of social content source than the first social content source. As one illustrative example in these regards, any unanswered telephone call from a second category social content source might count in these regards whereas, for a first category social content source, an unanswered phone call may only count if the would-be recipient actively uses an "ignore" button (or the like) to silence a ringing telephone.

The first category of source might be appropriate for use with, for example, casual friends and acquaintances, distant family members, and so forth. The second category of source, however, might be appropriate for use with supervisors and other authoritarian figures, spouses and other close family members, important customers, and so forth.

So configured, this monitoring activity permits the control circuit to develop metrics, on a source-by-source basis, regarding, for example, an extent to which a given recipient of social content is ignoring social content provided by those sources. This process 100 then uses 102 this treatment information to determine an identifying image to present for a given one of the various social content sources. As used here, this reference to "image" will be generally understood to refer to a depiction of at least some portion of a person and does not include, for example, mere text or other alphanumeric content.

By way of illustration and again without intending any limitations by way of these details, FIG. 2 provides an example of how a given device, such as a smartphone, might present an email inbox on a given display 200. This email inbox has a first portion 201 and a second portion 202. Social content source names (or other textual identifiers, such as email addresses or the like) associated with incoming emails are shown in the first portion 201. A picture 204 of the person that corresponds to a presently selected name 203 appears in the second portion 202.

In the illustrated example, the person's picture 204 comprises a facing-forward style of portrait. Such images (and the practice of automatically displaying such an image in conjunction with a selected or pre-selected name, email, or the like) are known in the art and require no particular further elaboration here aside from noting that the present teachings are again quite flexible and will accommodate using photographs, artistic renderings, fanciful avatars, and so forth as desired. This facing-forward style of picture can serve here to indicate that the recipient does not appear to be ignoring this particular person as measured by the aforementioned monitored treatment of the social content that has been received from this particular person.

When, however, the foregoing use 102 of the treatment information leads to a determination that the recipient user has been, for example, ignoring the social content of this particular person, a different image can be selected. As illustrated in FIG. 3, this different image, intended to convey that the recipient is possibly ignoring this person a bit too much, can comprise an image of a non-face portion (such as the backside of the person's head 301). Such an image is easily distinguished from the facing-forward style of portrait and is readily intuitively understood as conveying at least a mild social challenge or snub. This information and sense, in turn, can be taken into account by the recipient when deciding whether to open this latest social content or whether to delete without opening, store without opening, or otherwise ignore the social content for the moment.

Having selected a particular image, this process 100 can then of course present 103 the selected image as desired. This process will accommodate a variety of approaches in these regards. By one approach, for example, a facing-forward image can first be displayed followed within a short period of time (such as one second, two seconds, or the like) by the back-of-the-head image. As another example, animation can serve to appear to rotate the person's head from a facing-forward position to a rearward-facing position.

These teachings will also accommodate using a more graduated approach to conveying a possibly growing sense of being ignored on the part of the source. For example, treatment information indicating that four emails from a given person have been ignored in the last three days might lead to a decision to present a head 401 that is rotated half way between the facing-forward position and the rearward-facing position as illustrated in FIG. 4. Should four further emails arrive from this same source and also be deleted without being opened, this process 100 could then determine to use the full rearward-facing image to communicate the greater number of ignored emails.

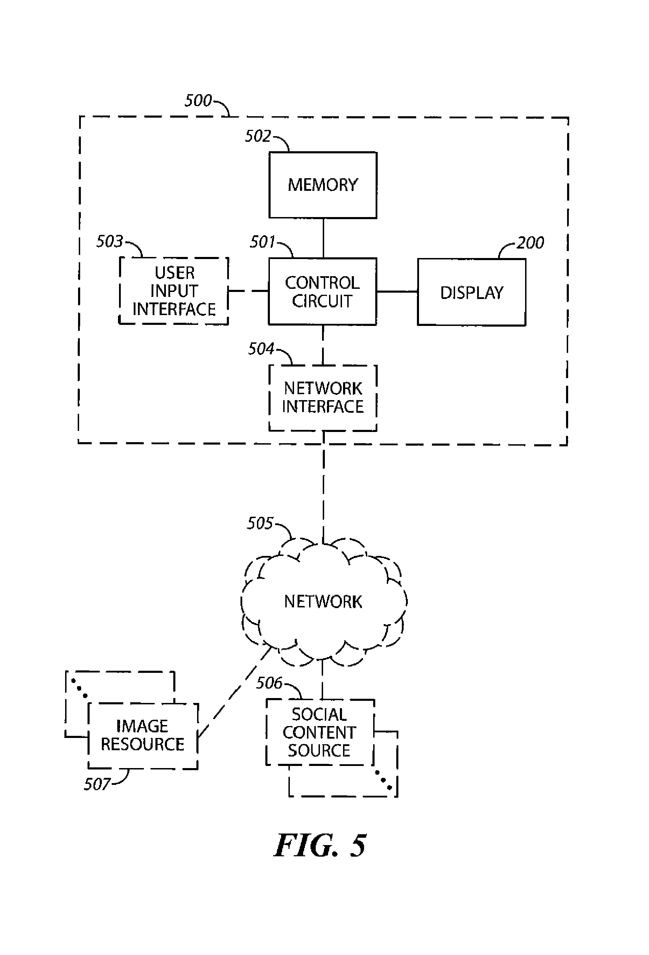

A variety of different control circuits will suffice to carry out the aforementioned process 100. By way of illustration, FIG. 5 depicts an apparatus 500 comprising a personal communication device having a control circuit 501 that operably couples to a memory 502 and the previously-mentioned display 200. Such a control circuit 501 can comprise a fixed-purpose hard-wired platform or can comprise a partially or wholly programmable platform. These architectural options are well known and understood in the art and require no further description here. This control circuit 501 is configured (for example, by using corresponding programming as will be well understood by those skilled in the art) to carry out one or more of the steps, actions, and/or functions described herein.

The memory 502 may be integral to the control circuit 501 or can be physically discrete (in whole or in part) from the control circuit 501 as desired. This memory 502 can also be local with respect to the control circuit 501 (where, for example, both share a common circuit board, chassis, power supply, and/or housing) or can be partially or wholly remote with respect to the control circuit 501 (where, for example, the memory 502 is physically located in another facility, metropolitan area, or even country as compared to the control circuit 501).

This memory 502 can serve, for example, to non-transitorily store computer instructions that, when executed by the control circuit 501, cause the control circuit 501 to behave as described herein, (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).) This memory 502 can also serve to store one or more images as referred to herein along with information to correlate those images to specific corresponding social content sources.

By one approach this apparatus 500 can further optionally comprise a user input interface 503 that also operably couples to the control circuit 501. Such a user input interface 503 can comprise any of a variety of input mechanisms such as, but not limited to, keyboards and keypads, any of a variety of buttons and switches, a touch-sensitive surface (including a touch-sensitive surface associated with the display 200), any of a variety of cursor-movement devices (such as mice, trackballs, optical trackpads, and so forth), voice-responsive components, and so forth.

By one approach, it can be via this user input interface 503 that the user of the device 500 takes actions that comprise the social content treatment being monitored by the control circuit 501. For example, it can be via a touch-sensitive screen that a user deletes an email that has not yet been opened.

By one approach, this apparatus 500 can further optionally include a network interface 504 that operably communicatively couples the control circuit 501 to a network 505. The network interface 504 can be any of a variety of wireless or non-wireless interfaces as are known in the art. Similarly, the network 505 can be any of a variety of communications networks including, but not limited to, the Internet.

So configured, the control circuit 501 can, for example, receive social content as referenced above via the network 505 from any of a variety of social content sources 506. Such a configuration offers other possibilities as well. For example, the control circuit 501 could have access to one or more remote resources such as one or more image resources 507. In such a case the control circuit 501 could obtain some or all of the aforementioned images from such an image resource 507.

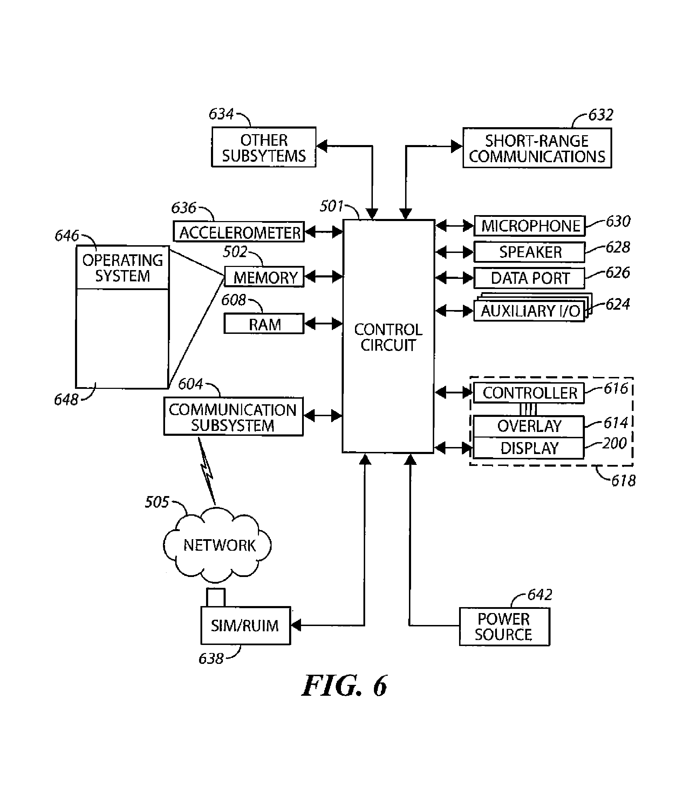

The described apparatus can comprise any of a wide variety of devices. FIG. 6 depicts an example portable electronic device that uses the aforementioned control circuit 501 to also control the overall operation of the portable electronic device. Communication functions, including data and voice communications, are performed through a communication subsystem 604. The communication subsystem receives messages from and sends messages to a wireless network 505. Again, the wireless network 505 may be any type of wireless network, including, but not limited to, data wireless networks, voice wireless networks, and networks that support both voice and data communications. A power source 642, such as one or more rechargeable batteries or a port to an external power supply, powers the electronic device.

The control circuit 501 interacts with other elements, such as Random Access Memory (RAM) 608, the aforementioned memory 502, the aforementioned display 200 with a touch-sensitive overlay 614 operably coupled to an electronic controller 616 that together comprise an optional touch-sensitive display 618, an auxiliary input/output (I/O) subsystem 624, a data port 626, a speaker 628, a microphone 630, a short-range communication subsystem 632, and other device subsystems 634 of choice. The control circuit 501 may also interact with an accelerometer 636 that may be utilized to detect direction of gravitational forces or gravity-induced reaction forces.

To identify a subscriber for network access, the portable electronic device may utilize a Subscriber Identity Module or a Removable User Identity Module (SIM/RUIM) card 638 for communication with a network, such as the wireless network 505. Alternatively, user identification information may be programmed into the memory 502.

The portable electronic device includes an operating system 646 and software programs, applications, or components 648 that are executed by the control circuit 501 and are typically stored in a persistent, updatable store such as the memory 502. Additional applications or programs may be loaded onto the portable electronic device through the wireless network 505, the auxiliary I/O subsystem 624, the data port 626, the short-range communications subsystem 632, or any other suitable subsystem 634. The memory 502 may comprise a non-transitory storage media that stores executable code, when executed, causes one or more of functions or actions as described herein.

A received signal, including social content such as a text message or an e-mail message, is processed by the communication subsystem and input to the control circuit 501. The control circuit 501 processes the received signal for output to the display 200 and/or to the auxiliary I/O subsystem 624 and monitors the user's treatment of that content as described herein. A subscriber may generate data items, for example e-mail messages, which may be transmitted over the wireless network 505 through the communication subsystem. For voice communications, the overall operation of the portable electronic device is similar. The speaker 628 outputs audible information converted from electrical signals, and the microphone 630 converts audible information into electrical signals for processing.

The present disclosure may be embodied in other specific forms without departing from its essential characteristics. As but one example in these regards, the aforementioned images may comprise pre-existing images that are stored for use as described. If desired, however, these teachings will accommodate other approaches in these regards. For example, the control circuit may be configured to automatically derive and render, at a time of need, a determined image.

The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
at a control circuit (501):
monitoring (101) treatment of incoming social content to provide treatment information corresponding to various social content sources (506); and
using (102) the treatment information to determine an identifying image to present for a given one of the various social content sources.

2. The method of claim 1 wherein the incoming social content comprises at least one of:
an email;
a short-message service message;
a text;
a Tweet; and
a voice call.

3. The method of claim 1 wherein the treatment information indicates an extent to which the incoming social content was processed per a user's corresponding instruction.

4. The method of claim 3 wherein the extent to which the incoming social content was processed indicates, at least, whether the user opened the incoming social content.

5. The method of claim 1 wherein the treatment information reflects the treatment over time of the incoming social content for a variety of the social content sources.

6. The method of claim 1 wherein using the treatment information to determine an identifying image comprises, at least in part, whether to present one of an image of a face of a particular social content source and an image of a non-face portion of the particular social content source's head.

7. The method of claim 6 wherein the non-face portion of the particular social content source's head comprises a backside of the particular social content source's head.

8. An apparatus (500) comprising:
a memory (502);
a display (200); and
a control circuit (501) operably coupled to the memory and the display and configured to:
- monitor (101) treatment of incoming social content to provide treatment information corresponding to various social content sources (506) that is stored in the memory;
- use (102) the treatment information to determine an identifying image to present on the display for a given one of the various social content sources.

9. The apparatus of claim 8 wherein the apparatus comprises a portable communications device.

10. The apparatus of claim 8 wherein the treatment information indicates an extent to which the incoming social content was processed per a user's corresponding instruction.

11. The apparatus of claim 10 wherein the extent to which the incoming social content was processed indicates, at least, whether the user opened the incoming social content.

12. The apparatus of claim 8 wherein the treatment information reflects the treatment over time of the incoming social content for a variety of the social content sources.

13. The apparatus of claim 8 wherein the control circuit is configured to use the treatment information to determine an identifying image by, at least in part, determining whether to present one of an image of a face of a particular social content source and an image of a non-face portion of the particular social content source's head.

14. A personal communication device comprising:
a network interface (504);
a memory (502) having identifying images for each of a plurality of social content sources (506) stored therein, wherein for each of at least some of the social content sources there are at least two different identifying images so stored;
a display (200); and
a control circuit (501) operably coupled to the network interface, the memory, and the display, the control circuit is configured to:
- receive incoming social content from the plurality of social content sources via the network interface;
- monitor (101) treatment of the incoming social content to provide treatment information corresponding to the various social content sources; and
- use (102) the treatment information to determine which of the identifying images to present on the display for a given one of the various social content sources when providing information regarding incoming social content.

15. The personal communication device of claim 14 wherein the control circuit is configured to use the treatment information to determine when to use a first identifying image that presents a face of a particular social content source to present on the display when providing the information regarding incoming social content that corresponds to that particular social content source and when to use a second identifying image that presents a backside of the particular social content source's head to present on the display when providing the information regarding incoming social content that corresponds to that particular social content source, such that the control circuit will tend to select the backside image as incoming social content for that particular social content source tends to be ignored.

## Amended claims

### Amended claims in accordance with Rule 137(2) EPC.

**1.** A method comprising:
at a control circuit (501):
monitoring (101) treatment of incoming social content from a social content source (506) to provide treatment information corresponding to the social content source (506);
wherein the treatment information indicates an extent to which incoming social content from the social content source was processed per a user's corresponding instruction; and
using (102) the treatment information to determine an identifying image to present for the social content source.

**2.** The method of claim 1 wherein the incoming social content comprises at least one of:
an email;
a short-message service message;
a text;
a Tweet; and
a voice call.

**3.** The method of claim 1 wherein the treatment information indicates an extent to which the incoming social content was ignored by the user.

**4.** The method of claim 1 wherein the extent to which the incoming social content was processed indicates, at least, whether the user opened the incoming social content.

**5.** The method of claim 1 wherein the treatment information reflects the treatment over time of the incoming social content for a variety of the social content sources.

**6.** The method of claim 1 wherein using the treatment information to determine an identifying image comprises, at least in part, whether to present one of an image of a face of a particular social content source and an image of a non-face portion of the particular social content source's head.

**7.** The method of claim 6 wherein the non-face portion of the particular social content source's head comprises a backside of the particular social content source's head.

**8.** An apparatus (500) comprising:
a memory (502);
a display (200); and
a control circuit (501) operably coupled to the memory and the display and configured to:
- monitor (101) treatment of incoming social content to provide treatment information corresponding to various social content sources (506) that is stored in the memory;
- wherein the treatment information indicates an extent to which incoming social content from the social content source was processed per a user's corresponding instruction;
- use (102) the treatment information to determine an identifying image to present on the display for the social content source.

**9.** The apparatus of claim 8 wherein the apparatus comprises a portable communications device.

**10.** The apparatus of claim 8 wherein the treatment information indicates an extent to which the incoming social content was ignored by the user.

**11.** The apparatus of claim 8 wherein the extent to which the incoming social content was processed indicates, at least, whether the user opened the incoming social content.

**12.** The apparatus of claim 8 wherein the treatment information reflects the treatment over time of the incoming social content for a variety of the social content sources.

**13.** The apparatus of claim 8 wherein the control circuit is configured to use the treatment information to determine an identifying image by, at least in part, determining whether to present one of an image of a face of a particular social content source and an image of a non-face portion of the particular social content source's head.

**14.** A personal communication device comprising:
a network interface (504);
a memory (502) having identifying images for each of a plurality of social content sources (506) stored therein, wherein for each of at least some of the social content sources there are at least two different identifying images so stored;
a display (200); and
a control circuit (501) operably coupled to the network interface, the memory, and the display, the control circuit is configured to:
- receive incoming social content from a social content source via the network interface;
- monitor (101) treatment of the incoming social content to provide treatment information corresponding to the social content source
- wherein treatment information indicates an extent to which incoming social content from the social content source was processed per a user's corresponding instruction; and
- use (102) the treatment information to determine which of the identifying images to present on the display for the social content source when providing information regarding incoming social content.

**15.** The personal communication device of claim 14 wherein the control circuit is configured to use the treatment information to determine when to use a first identifying image that presents a face of a particular social content source to present on the display when providing the information regarding incoming social content that corresponds to that particular social content source and when to use a second identifying image that presents a backside of the particular social content source's head to present on the display when providing the information regarding incoming social content that corresponds to that particular social content source, such that the control circuit will tend to select the backside image as incoming social content for that particular social content source tends to be ignored.
